# EUROPÄISCHE PATENTSCHRIFT

(11) **EP 1 843 905 B1**
(45) Veröffentlichungstag und Bekanntmachung des Hinweises auf die Patenterteilung: **09.09.2009**
(21) Anmeldenummer: 06706516.9
(22) Anmeldetag: 31.01.2006
(51) Int. Cl.: B60C 23/04

(54) **REIFENLUFTDRUCK-KONTROLLEINRICHTUNG UND VERFAHREN ZUR REIFENLUFTDRUCKKONTROLLE**
DEVICE AND METHOD FOR TYRE AIR PRESSURE CONTROL
DISPOSITIF ET PROCEDE DE COMMANDE DE LA PRESSION DE PNEUMATIQUES

(30) Priorität: 02.02.2005 DE 102005004833
(43) Veröffentlichungstag der Anmeldung: 17.10.2007
(73) Patentinhaber: Global Dynamix AG, 7500 St. Moritz (CH)
(72) Erfinder: ACHTERHOLT, Rainer, CH-8597 Landschlacht (CH)
(74) Vertreter: Samson & Partner
(86) Internationale Anmeldenummer: PCT/EP2006/000823
(87) Internationale Veröffentlichungsnummer: WO 2006/082021

(56) Entgegenhaltungen:
- EP-A- 1 215 056
- DE-A1- 10 144 360
- DE-A1- 10 307 265

## Beschreibung

Die vorliegende Erfindung betrifft das technische Gebiet der Luftdruckkontrolle an luftbereiften Fahrzeugen. Mehr im Einzelnen betrifft die vorliegende Erfindung eine Reifenluftdruck-Kontrolleinrichtung für ein Fahrzeug mit mehreren Rädern, die je mit einem Luftreifen ausgerüstet sind, wobei jeder überwachte Luftreifen mit einem solchen Radmodul versehen ist, das Luftdruckdaten enthaltende Funktelegramme erzeugt und telemetrisch an ein Steuergerät am Fahrzeug übermittelt. Weiterhin betrifft die Erfindung ein Verfahren zur Durchführung der Reifenluftdruckkontrolle mit Hilfe einer solchen Reifenluftdruck-Kontrolleinrichtung. In allen Fällen ist die Erfindung hier vorzugsweise für die Anwendung an Fahrzeugen mit vier Laufrädern bestimmt, also insbesondere für PKW, Transporter, Lieferwagen, Pick-ups, leichte und mittlere LKW und Omnibusse.

Jeder überwachte Luftreifen ist hier mit einem Radmodul versehen, das einen Dateninhalt übertragende Funktelegramme erzeugt und mit einer für die telemetrische Übermittlung an ein Steuergerät im Fahrzeug ausreichenden Signalstärke aussendet. Es ist nicht erforderlich, dass sämtliche Luftreifen mit einem solchen Radmodul ausgerüstet sind. Sind jedoch mehrere Luftreifen in verschiedenen Radpositionen mit einem solchen Radmodul versehen, so muss das Steuergerät ein empfangenes Funktelegramm derjenigen Radposition zuordnen können, in der sich ein bestimmtes Rad befindet, dessen Radmodul gerade dieses Funktelegramm ausgesendet hat. Es stellt sich das in der Fachwelt bekannte Problem der Zuordnung eines Funktelegramms zu seiner Radposition.

Hierzu hat das Dokument DE 42 05 911 A1 bereits in 1993 eine Kontrollvorrichtung für den Luftdruck von luftbereiften Fahrzeugrädern offenbart, die an jedem Fahrzeugrad ein mit diesem rotierendes Sendegerät (bzw. Radmodul) aufweist. Ferner ist eine Empfangseinrichtung (bzw. Steuergerät) vorhanden, welche typischerweise im Fahrzeug untergebracht ist.

Im einzelnen wird mit diesem Dokument vorgeschlagen, dass
- jedes Radmodul eine Signalgenerierungs-Einrichtung aufweist, welche ein Identifikationssignal generiert, das für jedes Radmodul charakteristisch ist und dieses eindeutig identifiziert. Dieses Identifikationssignal kann in Form eines n-Bit-Wortes (mit n = 8, 16, 24, 32 oder mehr) erzeugt und im Bereich der Sendeeinrichtung gespeichert werden;
- dieses Identifikationssignal zumindest einmal vor oder nach der Ausstrahlung der Nutzsignale als Bestandteil eines Funktelegramms dieses Radmoduls ausgestrahlt wird;
- das Steuergerät zumindest einen Speicher aufweist, in dem ein dem zugehörigen individuellen Radmodul zugeordnetes Identifikations-Vergleichssignal abgespeichert ist;
- das Steuergerät eine Vergleichseinrichtung aufweist, welche prüft, ob das von dem Radmodul ausgestrahlte Identifikationssignal mit dem in dem Steuergerät gespeicherten Identifikations-Vergleichssignal übereinstimmt; und
- eine Weiterverarbeitung der von dem Steuergerät aufgenommenen Signale nur dann erfolgt, wenn das von der Zentraleinheit empfangene Identifikationssignal (mit Druckdatensignal) und das in der Zentraleinheit gespeicherte Identifikations-Vergleichssignal identisch sind.

Dieser Ablauf entspricht dem Arbeitsmodus, in dessen Verlauf die Radmodule Funktelegramme erzeugen und telemetrisch an ein Steuergerät übermitteln, wo die in den Funktelegrammen enthaltenen Nutzsignale ausgewertet werden, um den in jedem überwachten Luftreifen auftretenden Reifenluftdruck auf einem Display anzuzeigen und/oder um bei fehlerhaftem Reifenluftdruck einen Alarm auszulösen.

Zusätzlich muss im Verlauf einer Initialisierungsphase ein Lern- oder Zuordnungsmodus durchgeführt werden, der das Steuergerät in die Lage versetzt, ein bestimmtes Identifizierungssignal einer bestimmten Radposition zuzuordnen, in der sich das durch dieses bestimmte Identifizierungssignal identifizierte Radmodul gerade befindet; erst nachdem dieser Zuordnungsmodus durchgeführt worden ist, können auch die mit diesem Identifizierungssignal verbundenen Messdatensignale dieser Radposition zugeordnet werden. Mit dem vorstehend zitierten Dokument DE 42 05 911 A1 wird hierzu ein besonderer "Paarungsmodus" zwischen Radmodul und Steuergerät vorgeschlagen, der mit einem zusätzlichen Hilfsgerät ausgelöst wird; hierzu heißt es dort sinngemäß:
- "Bei diesem Ausführungsbeispiel geht eine Bedienungskraft mit dem Aktivierungsgerät, welches die Umschaltung des jeweiligen Radmodul in den Paarungsmodus bewirkt, von Rad zu Rad und schaltet damit das jeweilige Rad in den Paarungsmodus um. Durch eine entsprechende Betätigung eines Schalters an der Zentraleinheit oder durch die Einhaltung einer bestimmten vorgegebenen Reihenfolge werden dann die jeweiligen an die Zentraleinheit eintreffenden Funktelegramme den einzelnen Radpositionen zugeordnet.
- Eine derartige Aktivierung kann auch durch andere Ereignisse ausgelöst werden. So kann am Radmodul ein Reedkontakt vorgesehen sein, welcher mit einem von außen in die Nähe des Reifens gebrachten Magneten betätigt wird. Weiterhin ist es denkbar, am Reifenventilschaft oder am Reifenventilfuß eine mechanisch zu betätigende Einrichtung vorzusehen, die manuell geschaltet oder durch eine manuell bewirkte seitliche Kippbewegung des Ventils betätigt wird".

Sofern daher eine solche Vorrichtung zur Reifenluftdruckkontrolle mit spezifischen Kennungen (Identifizierungssignalen, Identifizierungscodes) arbeitet, die jedes Radmodul in eindeutiger Weise identifizieren, muss neben dem normalen Arbeitsmodus zwingend auch der vorstehend beschriebene Zuordnungsmodus durchgeführt werden, welcher das Steuergerät in die Lage versetzt ein bestimmtes Funktelegramm anhand des darin enthaltenen Identifizierungssignals einer bestimmten Radposition zuzuordnen, aus welcher dieses bestimmte Funktelegramm gerade stammt.

Die nachstehend zitierten Dokumente offenbaren alternative Vorschläge zur Durchführung dieses Zuordnungsmodus.

Das Dokument DE 196 08 478 A1 betrifft ein Verfahren zur Zuordnung von Sendern zu Empfangsantennen bei Reifendrucküberwachungssystemen. Hier wird vorgeschlagen, dass benachbart zu jedem Rad an der Fahrzeugkarosserie, etwa im Bereich des Radkasten, eine Empfangsantenne angebracht wird, die an die Auswerteelektronik des Steuergeräts angeschlossen ist. Das Verfahren sieht die folgenden Verfahrensschritte vor:
- Registrieren der Intensitäten der von den jeweiligen Empfangsantennen empfangenen, von verschiedenen Sendern stammenden Signale unter ihrer Kennung;
- Vergleichen der Intensitäten der von ein und derselben Empfangsantenne empfangenen Signale unterschiedlicher Kennung derart, dass bei dem Intensitätsvergleich mehrere aufeinanderfolgend empfangene Signale berücksichtigt werden;
- Auswählen der Senderkennung mit der größten Intensität an einer Empfangsantenne und deren Zuordnung zu dieser Empfangsantenne.

Nach diesem Verfahren werden alle Radmodule und deren Funktelegramme gleichzeitig ausgewertet. Dieser Zuordnungsmodus erfordert eine zeitlich relativ lange Sendephase, welche den Stromspeicher am Radmodul nicht unerheblich belastet. Ferner hat die Zuverlässigkeit dieser Art der Zuordnung nicht befriedigt.

Das Dokument DE 199 21 413 C1 betrifft ein Verfahren zur Durchführung der Zuordnung von Reifendruckkontrollvorrichtungen (bzw. Radmodule) zu Radpositionen in einem Reifendruckkontrollsystem eines Kraftfahrzeuges. Jedes Radmodul sendet in zeitlichen Abständen seine individuelle Kennung und ein verlängertes Hochfrequenzsignal an die Zentraleinheit (bzw. das Steuergerät) des Reifendruckkontrollsystems. Die Hochfrequenzsignale weisen aufgrund der Geometrie des Radkastens und in Folge der Rotation des Rades einen vom Rotationswinkel des Rades und von der Zeit abhängigen individuellen Verlauf auf. In dem Steuergerät wird aus zwei aufeinander folgenden Hochfrequenzsignalen jeweils ein Zeitpunkt festgelegt, zu dem das Rad, von dem aus die Signale gesendet wurden, jeweils die gleiche Winkelposition einnimmt. Zwischen den beiden Zeitpunkten hat das entsprechende Rad eine ganzzahlige Anzahl von Umdrehungen gemacht. In dem Steuergerät wird mit Hilfe der Signale der Drehzahlsensoren die Radposition ermittelt, in der das Rad zwischen den beiden Zeitpunkten eine ganzzahlige Anzahl von Umdrehungen gemacht hat. Die entsprechende Radposition wird der von dem Radmodul übermittelten individuellen Kennung zugeordnet.

Dies ist ein typisches Beispiel von vielen hochkomplexen Systemen, die in Herstellung, Installation und Betrieb sehr aufwändig sind, und bislang in der Praxis nicht realisiert worden sind.

Das Dokument EP 0 760 299 B1 betrifft eine Vorrichtung für Reifenfülldruck-Kontrollsysteme in Kraftfahrzeugen. Um den Lernmodus für die Auswertevorrichtung zur radbezogenen Zuordnung der Sensorvorrichtungen zu vereinfachen bzw. zu automatisieren wird eine Vorrichtung für Reifenfülldruck-Kontrollsysteme in Kraftfahrzeugen mit Sensorvorrichtung an jedem Rad vorgeschlagen, die Informationen an eine im Fahrzeug angeordnete Auswertevorrichtung übermitteln. Jede Sensorvorrichtung ist mit einem Sensor zur Erfassung der Drehrichtung des ihr zugeordneten Rades ausgestattet, der die Information der Drehrichtung an die Auswertevorrichtung übermittelt. Zur Erfassung der Drehrichtung wird ein Rollschalter vorgeschlagen; alternativ können hierzu auch andere Sensoren, wie z.B. Tangential- und/oder Radialbeschleunigungs-Aufnehmer verwendet werden. Die Feststellung der Drehrichtung oder Laufrichtung eines Rades erlaubt eine Feststellung darüber, ob sich das jeweilige Rad auf der in Fahrtrichtung gesehenen linken Seite oder rechten Seite des Fahrzeugs befindet.

Das Dokument EP 1 003 647 B1 betrifft ein Verfahren zum Zuordnen von Kennungen in Signalen von Sendern in einem Reifendruck-Überwachungssystem zu den Rädern, an welchen sich die Sender befinden. Es wird vorgeschlagen, die am jeweiligen Rad vorhandene Radelektronik dahingehend zu ergänzen, dass sie nicht nur den Reifendruck misst und mit Hilfe eines, auch die spezifische Kennung dieser Radelektronik enthaltenden Funktelegramms an die zentrale Empfangs- - und Auswertungselektronik übermittelt, sondern dass:
- an den überwachten Rädern zusätzlich zum Luftdruck im Reifen eine sich aus dem Bewegungszustand des jeweiligen Rades ergebende Bahnbeschleunigung gemessen,
- ein daraus abgeleitetes Bahnbeschleunigungssignal mittels des jeweiligen Senders der Empfangs- und Auswerteelektronik signalisiert, und
- auf eine im Bahnbeschleunigungssignal enthaltene Information über die Lage jenes Rades ausgewertet wird, von welchem das Bahnbeschleunigungssignal ausgeht, wobei
- zur Unterscheidung von Rädern auf der rechten Seite des Fahrzeugs von Rädern auf der linken Seite des Fahrzeugs das Vorzeichen der am Rad auftretenden Bahnbeschleunigung bereits in einer am Rad vorgesehenen Auswerteschaltung in der Beschleunigungsphase nach einem Start des Fahrzeuges bestimmt wird.

Im Ergebnis wird hier vorgeschlagen, am rotierenden Rad bereits erhebliche Informationen über dessen Radposition zu bilden, diese Radpositionsinformationen drahtlos an das Steuergerät zu übermitteln, damit sie dort mit der Kennung (Identifikationscode) dieses Radmoduls korreliert werden, damit in späteren Funktelegrammen dieses Radmoduls dessen Reifendrucksignale (über diesen spezifischen Identifikationscode) der derzeitigen Radposition dieses Radmoduls zugeordnet werden können.

Schließlich hat das Dokument DE 43 03 583 A1 bereits in 1994 ein Radmodul dieser Art offenbart, das eine Datenspeichereinrichtung aufweist, in der ein Drucksignal gespeichert werden kann; als beispielhafte elektronische Speicher werden RAM und EEPROM genannt. Das dort beschriebene Radmodul kann zusätzlich auch einen Beschleunigungssensor enthalten, der beispielsweise in Form eines piezo-resistiven Wandlers mit Wheatstone-Brückenschaltung ausgebildet ist.

Auch mehr als zehn Jahre nach UWATEC (= DE 42 05 911 A1) steht immer noch kein völlig befriedigendes System zur Durchführung des Zuordnungsmodus zur Verfügung. Insbesondere fordert die KFZ-Industrie hier Systeme, die völlig autonom arbeiten, ohne irgendeine Mitwirkung bzw. Aktivierung durch den Fahrzeugführer. Es besteht daher weiterhin Bedarf nach einem einfachen, zuverlässigen und autonom arbeitenden System zur Reifenluftdruckkontrolle bei Fahrzeugen, insbesondere bei PKWs.

Aus dem Dokument DE 101 44 360 A1 ist eine Reifenluftdruck-Kontrolleinrichtung nach dem Oberbegriff von Anspruch 1 bekannt. Bei dieser werden während der Fahrt des Kraftfahrzeugs Kenngrössen der Räder und zugeordnete Radpositionen über ein im Kraftfahrzeug angeordnetes Fahrerassistenzsystem erfasst und daraus in dem Fahrerassistenzsystem als Kurveninformation ermittelt, ob eine Links- oder Rechtskurve gefahren wird und welche Kurve gerade gefahren wird, wobei die Kurveninformation an eine Auswerteeinheit übermittelt wird. Bei erkannter Kurvenfahrt wird ein Zuordnungsmodus für die Reifendruckmessvorrichtungen (2) eingeleitet, wonach mit Hilfe eines Sensors in jedem Reifen eine der Geschwindigkeit des jeweiligen Rades proportionale, physikalische Grösse gemessen wird und der Wert der physikalischen Grösse zusammen mit Kennungen der jeweiligen Reifendruckmessvorrichtungen an die Auswerteeinheit drahtlos gesendet werden. In einer Auswerteeinheit wird die Kurveninformation mit den von den Sensoren im Reifen gemessenen Grösse oder daraus errechneten Grössen miteinander in Beziehung gebracht, woraus eine Zuordnung der Kennungen und damit der Reifendruckmessvorrichtungen zu Radpositionen getroffen werden kann.

Die Aufgabe der vorliegende Erfindung besteht darin, ein einfaches, zuverlässiges und autonom arbeitendes System zur Reifenluftdruckkontrolle bei Fahrzeugen bereitzustellen. Das System soll insbesondere für PKW und vergleichbare Fahrzeuge mit vier Laufrädern geeignet sein.

Zur Lösung dieser Aufgabe ist der hier benannte Erfinder von nachstehenden Überlegungen und Ergebnissen eigener Entwicklungsarbeiten ausgegangen:
A: Auch mehr als zehn Jahre nach UWATEC (= DE 42 05 911 A1) ist das Problem des Zuordnungsmodus nicht befriedigend gelöst. Dieses Problem stellt sich notwendigerweise, wenn jedem Radmodul eine eigene spezifische Kennung bzw. Identifikationscode zugewiesen wird. Gegebenenfalls ist der bislang von der Fachwelt akzeptierte Vorschlag des Radmodul-Identifikationscode nicht zielführend.
B: Der von BERU (= EP 1 003 647 B1) vorgeschlagene Weg, am Radmodul bereits anteilige Informationen über dessen Radposition bezüglich des Fahrzeuges zu bilden, diese anteiligen Radpositionsinformationen dann per Funktelegramm an das Steuergerät zu übermitteln, um sie dort mit der Kennung dieses Radmoduls zusammenzuführen und zuzuordnen, erscheint unnötig aufwendig. Es müsste gelingen, diese Radpositionsinformationen am Radmodul so einfach, sicher, stabil und beliebig wiederholbar zu bilden, dass diese Radpositionsinformation die Radmodulkennung ersetzen kann.
C: Die vier Laufräder eines typischen Fahrzeugs (PKW und dergleichen) weisen bereits paarweise ein gemeinsames Radpositionskriterium auf, nämlich je zwei Räder in der Vorderachsposition und zwei Räder in der Hinterachsposition, oder zwei linksseitig montierte Räder und zwei rechtsseitig montierte Räder. Es erscheint verfehlt, diese bereits vorhandene anteilige Radpositionszuordnung aufzugeben, und alle Radmodule gleichartig und gleichwertig zu behandeln, beispielsweise bei einer Feldstärkenauswertung ihrer Funktelegramme, um anschließend wieder - mit erheblichem Aufwand - diese Radpositionszuordnung zu bilden.
D: Die bekannte Signalstärkenauswertung (vgl. DE 196 08 478 A1 und viele ähnliche Vorschläge) leidet darunter, dass versucht wird, innerhalb einer Messperiode sämtliche Signalquellen zu erfassen und zuzuordnen. Nach den Erfahrungen des Erfinders lassen sich mit einfacheren Mitteln zuverlässigere und weniger störungsanfällige Ergebnisse erzielen, wenn in einem ersten Schritt nur zwei Signalquellen ausgewertet und zugeordnet werden, und in einem nachfolgenden zweiten Schritt die beiden anderen Signalquellen ausgewertet und zugeordnet werden. Dies gilt sinngemäß auch für die Gewinnung von Radpositionsinformationen auf anderen Wegen.
E: Eine bidirektionale Signaldatenkommunikation zwischen Radmodul und Steuergerät ist bereits im Dokument DE 42 05 911 A1 angesprochen; vergleiche dort die Ausführungen von Spalte 10, Zeile 41 bis Spalte 11, Zeile 14. Allerdings erscheinen diese Ausführungen spekulativ, weil die dazu erforderlichen Elektronikbauteile für ein Radmodul am rotierenden Rad damals nicht zur Verfügung gestanden haben. Radmodule müssen robust, langlebig und leicht sein, um die Unwucht am rotierenden Rad möglichst gering zu halten. Für Radmodule geeignete HF-Sende/ Empfangseinrichtungen, so genannte Transceiver, sind nach Kenntnis des Erfinders erst in den letzten drei bis vier Jahren zur Verfügung gestellt worden. Erst recht stehen nach dem Kundenwunsch konfigurierte, sogenannte anwendungsspezifische Schaltkreise und Chips (ASIC, zumeist auf CMOS-Technik basierend) mit je integriertem Drucksensor, Temperatursensor, ein- oder mehrachsigem Beschleunigungssensor, Transceiver und Signalstärkensensor in Form einer integrierten internen RSSI-Schaltung erst seit kurzem zur Verfügung.
   Nachdem jetzt derartige, entsprechend den Kundenanforderungen konfigurierte Chips zur Verfügung stehen, müssen deren vielfältige Möglichkeiten auch für die Reifenluftdruckkontrolle genutzt werden: Das nach ihrer erstmaligen Aktivierung praktisch nicht mehr beeinflussbare, starre Senderegime der Radmodule bei unidirektionaler Signaldatenkommunikation kann jetzt durch ein flexibles, auf Aufforderung reagierendes ("instruction by demand") Senderegime abgelöst werden, das neue, überraschende Möglichkeiten eröffnet. Mit Hilfe einer intelligenten, wechselseitig abgestimmten Betriebsweise von Steuergerät und Radmodulen lässt sich auch bei bidirektionaler Signaldatenkommunikation der für die Empfangsphasen erforderliche Strombedarf an den Radmodulen gering halten.

Auf der Basis der vorstehend dargelegten Überlegungen, Forschungsarbeiten und deren Ergebnissen ist die vorliegende Erfindung entwickelt worden. Diese Erfindung umfasst mehrere Aspekte, wie nachstehend dargelegt.

Ein erster Aspekt der vorliegenden Erfindung betrifft
eine Reifenluftdruck-Kontrolleinrichtung
für ein Fahrzeug mit mehreren Rädern,
die je mit einem Luftreifen ausgerüstet sind,
umfassend wenigstens ein Radmodul für jeden überwachten Luftreifen, wobei das Radmodul aufweist:
- einen Drucksensor, um ein mit dem Luftreifen-Luftdruck korrespondierendes elektrisches Drucksignal zu erzeugen;
- einen Beschleunigungssensor, um am fahrenden Fahrzeug die Umdrehungsrichtung eines rotierenden Rades zu erfassen und daraus ein mit der jeweiligen Fahrzeugseite korrespondierendes Auswahlsignal zu bilden;
- eine Signaldatenverarbeitungseinrichtung mit einer Datenspeichereinrichtung, wobei die Signaldatenverarbeitungseinrichtung im Radmodul angefallene Signale, einschließlich des Drucksignals, verarbeitet und ein Funktelegramm erzeugt, das den im Radmodul angefallenen Signalen entsprechende Modulierungen aufweist; und
- eine, mit der Signaldatenverarbeitungseinrichtung gekoppelte HF-Sende/Empfangseinrichtung für die telemetrische Signaldaten-kommunikation mit einem Steuergerät am Fahrzeug; und
weiterhin umfassend ein stationär am Fahrzeug angebrachtes Steuergerät, das mit je einer Mikroprozessor gestützten Datensignalerzeugungseinrichtung und Datensignalverarbeitungseinrichtung sowie mit einer HF-Sende/Empfangseinrichtung mit wenigstens einer zugeordneten Antenne ausgerüstet ist,
um einerseits Aufforderungssignale zu erzeugen und telemetrisch an die Radmodule zu übermitteln, und
um andererseits die von den Radmodulen erzeugten Funktelegramme zu empfangen und auszuwerten, wobei
- das von diesen Beschleunigungssensoren an den betroffenen Radmodulen erzeugte Auswahlsignal je direkt oder in Form eines davon abgeleiteten Signals in deren Datenspeichereinrichtung gespeichert und für eine Korrelation mit einem Aufforderungssignal des Steuergeräts bereitgehalten wird;
- das Steuergerät ein selektierendes, das Vorliegen oder Nicht-Vorliegen des Auswahlsignals abfragendes Aufforderungssignal aussendet, das nur diejenigen Radmodule auffordert, innerhalb eines gegebenen Zeitfensters oder Zeitrasters ein Funktelegramm zu übermitteln, die über das gespeicherte Auswahlsignal verfügen oder nicht verfügen; und
- daraufhin, innerhalb des gegebenen Zeitfensters oder Zeitrasters, nur die von dem selektierten Radmodul oder von den selektierten Radmodulen stammenden Funktelegramme ausgesendet werden.

Ein zweiter Aspekt der vorliegenden Erfindung betrifft die Verwendung der erfindungsgemäßen Kontrolleinrichtung zur Durchführung der Reifenluftdruckkontrolle an einem Fahrzeug mit mehreren Rädern.

Weiter Aspekte der vorliegenden Erfindung ergeben sich aus der nachfolgenden Beschreibung der bevorzugten Ausführungsbeispiele und den abhängigen Ansprüchen.

Ein Ausführungsbeispiel der vorliegenden Erfindung betrifft
eine Reifenluftdruck-Kontrolleinrichtung
für ein Fahrzeug mit mehreren Rädern,
die je mit einem Luftreifen ausgerüstet sind,
wobei jeder überwachte Luftreifen mit einem Radmodul versehen ist, das wenigstens aufweist:
- einen, dem Luftreifen-Luftdruck ausgesetzten, integrierten Drucksensor mit Mess- und Steuerelektronik, um ein elektrisches Drucksignal zu erzeugen;
- einen Beschleunigungssensor mit angepasster Auswerteelektronik, um am fahrenden Fahrzeug die Umdrehungsrichtung eines rotierenden Rades zu erfassen und daraus ein mit der jeweiligen Fahrzeugseite korrespondierendes Auswahlsignal zu bilden;
- eine, mit einer Datenspeichereinrichtung versehene Signaldatenverarbeitungseinrichtung, welche im Radmodul angefallene Signale, einschließlich des Drucksignals verarbeitet und ein Funktelegramm erzeugt, das diesen Signalen entsprechende Modulierungen aufweist; und
- eine, mit der Signaldatenverarbeitungseinrichtung gekoppelte HF-Sende/Empfangseinrichtung für die telemetrische Signaldatenkommunikation mit einem Steuergerät am Fahrzeug; und
weiterhin ein, stationär am Fahrzeug angebrachtes Steuergerät vorhanden ist, das mit je einer Mikroprozessor gestützten Datensignalerzeugungseinrichtung und Datensignalverarbeitungseinrichtung sowie mit einer HF-Sende/Empfangseinrichtung mit einer oder mehreren zugeordneten Antenne(n) ausgerüstet ist, um einerseits Aufforderungssignale zu erzeugen und telemetrisch an die Radmodule zu übermitteln, und
um andererseits die von den Radmodulen erzeugten Funktelegramme zu empfangen und auszuwerten, wobei
- das von diesen Beschleunigungssensoren an den betroffenen Radmodulen erzeugte Auswahlsignal je direkt oder in Form eines davon abgeleiteten Signals in deren Datenspeichereinrichtung abgelegt und gespeichert und für eine Korrelation mit einem Aufforderungssignal des Steuergeräts bereitgehalten wird;
- das Steuergerät ein selektierendes, das Vorliegen oder Nicht-Vorliegen des Auswahlsignals abfragendes Aufforderungssignal aussendet, das nur diejenigen Radmodule auffordert, innerhalb eines gegebenen Zeitfensters oder Zeitrasters ein Funktelegramm zu übermitteln, die über das gespeicherte Auswahlsignal verfügen oder nicht verfügen; und
- daraufhin, innerhalb des gegebenen Zeitfensters oder Zeitrasters nur die von dem selektierten Radmodul oder von den selektierten Radmodulen stammenden Funktelegramme ausgesendet werden.

Das Abspeichern eines Auswahlsignals kann in der Weise erfolgen, dass nur die dafür vorgesehenen Speicherplätze eines Registers mit Spannung beaufschlagt werden, also "hoch" gesetzt werden. Werden diese bestimmten Speicherplätze nicht mit Spannung beaufschlagt, dann verbleiben sie "tief" oder sind "tief" gesetzt. Alternativ können diese bestimmten Speicherplätze mit entweder digital "1" oder digital "0" oder mit einem anderen unterscheidbaren Kriterium belegt werden, beispielsweise einem, aus einer Anzahl Bits bestehendem Datenwort. Für die Abfrage und Auswertung ist es gleichwertig, ob die abzufragenden Speicherplätze "hoch" oder "tief" gesetzt sind, bzw. mit einem Dateninhalt belegt oder nicht belegt sind. Folglich könnte das Steuergerät auch ein selektierendes, das Nicht-Vorliegen des Auswahlsignals abfragendes Auswahlsignal aussenden und damit die jeweils betroffenen Radmodule auffordern, ein Funktelegramm auszusenden.

Folglich soll nachstehend die Angabe "ein selektierendes, das Vorliegen eines Auswahlsignals abfragendes Aufforderungssignal" auch die Alternative, also "ein selektierendes, das Nicht-Vorliegen eines Auswahlsignals abfragendes Aufforderungssignal" einschließen, ohne dass dies je im Einzelfall angesprochen ist.

"Gegebenes Zeitfensters" meint hier, dass die selektierten Radmodule aufgefordert sind, nach Beendigung des Aufforderungssignals und nach Ablauf einer, für das/die selektierte(n) Radmodul(e) spezifischen Warteperiode, innerhalb einer bestimmten Zeitspanne das Funktelegramm der selektierten Radmodule auszusenden. Die spezifische Warteperiode wird so gewählt, dass ein Überlappen mit der Aussendung der Funktelegramme der nicht-selektierten Radmodule nicht auftritt. "Gegebenes Zeitraster" meint hier, dass das Aufforderungssignal die selektierten Radmodule auffordert, innerhalb einer bestimmten Abfolge von Zeitschlitzen ihre Funktelegramme auszusenden. Der Beginn dieses Zeitrasters und die Abstände zwischen diesen Zeitschlitzen sind so gewählt, dass eine Überlappung mit einem Aussenden der Funktelegramme der nicht-selektierten Radmodule nicht auftritt. In jedem Falle ist gewährleistet, dass innerhalb einer bestimmten, dem Steuergerät bekannten Zeitperiode nur Funktelegramme der selektierten Radmodule am Steuergerät eintreffen.

Die Radmodule werden nach ihrer erstmaligen und gegebenenfalls erneuten Aktivierung ein Anmeldungsfunktelegramm an das Steuergerät übermitteln. Das Steuergerät übermittelt daraufhin ein Anmeldungsbestätigungssignal an die Radmodule. Dieses Anmeldungsbestätigungssignal kann ein Zeitraster mit Zeitschlitzen zum Empfang der Aufforderungssignale vorgeben. Dadurch kann die Dauer der Empfangsbereitschaft der Radmodule zum Empfang der Aufforderungssignale sehr kurz gehalten werden, beispielsweise auf wenige Millisekunden beschränkt werden.

Vorzugsweise ist die erfindungsgemäße Reifenluftdruck-Kontrolleinrichtung für die Anwendung an einem Fahrzeug vorgesehen, das wenigstens vier Laufräder hat, wobei - je in Fahrtrichtung des Fahrzeugs - zwei Laufräder auf der linken Fahrzeugseite montiert sind und die beiden anderen Laufräder auf der rechten Fahrzeugseite montiert sind.

In diesem Sinne betrifft ein weiteres Ausführungsbeispiel der vorliegenden Erfindung eine Reifenluftdruck-Kontrolleinrichtung für ein Fahrzeug mit wenigstens vier Laufrädern, wobei - je in Fahrtrichtung des Fahrzeugs - zwei Laufräder auf der linken Fahrzeugseite montiert sind und die beiden anderen Laufräder auf der rechten Fahrzeugseite montiert sind, und jedes Laufrad mit einem Luftreifen ausgerüstet ist,
wobei jeder überwachte Luftreifen mit einem Radmodul versehen ist, das wenigstens aufweist:
- einen, dem Luftreifen-Luftdruck ausgesetzten, integrierten Drucksensor mit Mess- und Steuerelektronik, um ein elektrisches Drucksignal zu erzeugen;
- einen Beschleunigungssensor mit angepasster Auswerteelektronik, um am fahrenden Fahrzeug die Umdrehungsrichtung der Laufräder zu erfassen, um daraus ein erstes Auswahlsignal zu bilden, das mit der Umdrehungsrichtung der linksseitig montierten Laufräder korrespondiert, und um weiterhin ein zweites Auswahlsignal zu bilden, das mit der Umdrehungsrichtung der rechtsseitig montierten Laufräder korrespondiert;
- eine, mit einer Datenspeichereinrichtung versehene Signaldatenverarbeitungseinrichtung, welche im Radmodul angefallene Signale, einschließlich des Drucksignals verarbeitet und ein Funktelegramm erzeugt, das diesen Signalen entsprechende Modulierungen aufweist; und
- eine, mit der Signaldatenverarbeitungseinrichtung gekoppelte HF-Sende/Empfangseinrichtung für die telemetrische Signaldatenkommunikation mit einem Steuergerät am Fahrzeug; und
weiterhin ein, stationär am Fahrzeug angebrachtes Steuergerät vorhanden ist, das mit je einer Mikroprozessor gestutzten Datensignalerzeugungseinrichtung und Datensignalverarbeitungseinrichtung sowie mit einer HF-Sende/Empfangseinrichtung mit einer oder mehreren zugeordneten Antenne(n) ausgerüstet ist,
um einerseits Aufforderungssignale zu erzeugen und telemetrisch an die Radmodule zu übermitteln, und
um andererseits die von den Radmodulen erzeugten Funktelegramme zu empfangen und auszuwerten, wobei
- das von diesen Beschleunigungssensoren an je zwei Radmodulen erzeugte erste Auswahlsignal je direkt oder in Form eines davon abgeleiteten Signals in deren Datenspeichereinrichtung gespeichert wird (erste Radmodule); und
- das in den beiden anderen Radmodulen erzeugte zweite Auswahlsignal je direkt oder in Form eines davon abgeleiteten Signals in deren Datenspeichereinrichtung gespeichert wird (zweite Radmodule);
- die Zentraleinheit ein selektierendes Aufforderungssignal aussendet, das entweder die ersten Radmodule oder die zweiten Radmodule auffordert, innerhalb eines gegebenen Zeitfensters oder Zeitrasters ein Funktelegramm auszusenden; und
- daraufhin, innerhalb des gegebenen Zeitfensters oder Zeitrasters nur die von den beiden selektierten Radmodulen stammenden Funktelegramme ausgesendet werden.

Befindet sich an diesem Fahrzeug zusätzlich ein Reserverad mit Radmodul, so wird nach einer Aktivierung des Beschleunigungssensors in dessen Datenspeichereinrichtung weder das erste Auswahlsignal noch das zweite Auswahlsignal abgespeichert werden. Das Steuergerät kann ein selektierendes Aufforderungssignal aussenden, das solche Radmodule auffordert, ein Funktelegramm auszusenden, die weder über das erste Auswahlsignal noch über das zweite Auswahlsignal verfügen. Auf diesem Wege kann das Steuergerät ein Funktelegramm mit Druckdaten vom Reserverad erhalten und auswerten.

In einem weiteren Ausführungsbeispiel ist die Kontrollvorrichtung vorzugsweise für die Anwendung an einem Fahrzeug vorgesehen, das wenigstens vier Laufräder hat, wobei - je in Fahrtrichtung des Fahrzeugs - zwei Laufräder linksseitig montiert sind, und die beiden anderen Laufräder rechtsseitig montiert sind. Am fahrenden Fahrzeug erzeugen die Beschleunigungssensoren in den jeweiligen ersten Radmodulen ein erstes Auswahlsignal und in den zweiten Radmodulen ein zweites Auswahlsignal. Das Steuergerät sendet ein selektierendes Aufforderungssignal aus, das entweder die ersten Radmodule oder die zweiten Radmodule auffordert, innerhalb eines gegebenen Zeitfensters oder Zeitrasters ein Funktelegramm auszusenden; und daraufhin werden innerhalb des gegebenen Zeitfensters oder Zeitrasters nur die von den beiden selektierten Radmodulen stammenden Funktelegramme ausgesendet.

Auch bei diesem Ausführungsbeispiel kann der Reifenluftdruck in einem Reserverad in gleicher Weise erfasst und ausgewertet werden, wie vorstehend für die Reifenluftdruck-Kontrolleinrichtung beschrieben.

Damit ermöglicht die Erfindung eine Situation, bei welcher innerhalb eines gegebenen Zeitfensters oder Zeitrasters nur Funktelegramme von bereits vorselektierten Radmodulen am Steuergerät und/oder an dessen Empfangsantenne(n) eintreffen, beispielsweise nur Funktelegramme aus dem Radmodul am linken Vorderrad und aus dem Radmodul am linken Hinterrad. Durch gezielte Anordnung von Steuergerät und/oder dessen Empfangsantenne(n), beispielsweise im Bereich der Fahrzeug-Längsmittelebene und benachbart zu einer Fahrzeugachse sowie entfernt zur anderen Fahrzeugachse kann erreicht werden, dass diese Funktelegramme mit unterschiedlicher Signalstärke am Steuergerät eintreffen. Anhand dieses Signalstärkenunterschiedes kann dann das eine Funktelegramm dem einen Radmodul (beispielsweise am linken Vorderrad) und das andere Funktelegramm dem anderen Radmodul (beispielsweise am linken Hinterrad) zugeordnet werden. Weil hier zu einem gegebenen Zeitpunkt nur die Auswertung des Signalstärkenunterschiedes an zwei Funktelegrammen aus zwei verschiedenen Sendequellen durchgeführt werden muss, kann diese Auswertung einfach, schnell und zuverlässig durchgeführt werden. Beispielsweise kann der Signalstärkenunterschied mit Hilfe einer internen RSSI-Schaltung (von englisch: Received Signal Strength Indicator, RSSI) durchgeführt werden, die der HF-Sende/Empfangseinrichtung (bzw. Transceiver) am Steuergerät zugeordnet ist.

Entsprechende weitere vorteilhafte Ausgestaltungen und Weiterbildungen der vorliegenden Erfindung sind Gegenstand der Unteransprüche. "Reifenluftdruckkontrolle" bezieht sich hier auf die erfindungsgemäße Reifenluftdruck-Kontrolleinrichtung.

So kann vorzugsweise vorgesehen werden, dass zwei, von den beiden selektierten Radmodulen stammende Funktelegramme mit unterschiedlicher Signalstärke an der, mit dem Steuergerät gekoppelten Antenne eintreffen; und anhand ihres Signalstärkenunterschiedes dem einen selektierten Radmodul oder dem anderen selektierten Radmodul zugeordnet werden. In der Praxis wird das Funktelegramm mit der höheren Signalstärke dem zum Steuergerät benachbarten Radmodul zugeordnet, und das Funktelegramm mit der geringeren Signalstärke wird dem zum Steuergerät entfernten Radmodul zugeordnet. Weil das Verhältnis der Signallaufstrecken wenigstens 1 : 2 betragt, und nur Signale aus zwei verschiedenen Signalquellen auszuwerten sind, kann diese Auswertung schnell, sicher und zuverlässig erfolgen.

Vorzugsweise wird für das Steuergerät und/oder für dessen (Empfangs)-Antenne eine Anordnung im Bereich der Fahrzeug-Längsmittelebene und benachbart zu einer Fahrzeugachse sowie entfernt zur anderen Fahrzeugachse vorgesehen. Vorzugsweise soll das Steuergerät bzw. dessen (Empfangs)-Antenne nicht mehr als 40 cm von der Fahrzeug-Langsmittelebene und von der benachbarten Fahrzeugachse entfernt sein. Dadurch werden größtmögliche Abstände zu den mit den Aufforderungssignalen abgefragten Radmodulen erzielt. Es wird der größtmögliche Unterschied zwischen den Signallaufstrecken der jeweiligen Funktelegramme erhalten.

Die Signalstärke der Funktelegramme wird vorzugsweise mit Hilfe einer RSSI-Schaltung (von englisch: Received Signal Strength Indicator, RSSI) ermittelt und ausgewertet, die der HF-Sende/Empfangseinrichtung bzw. Transceiver am Steuergerät zugeordnet ist.

Die von den selektierten Radmodulen stammenden Funktelegramme enthalten Luftdruckdaten, die im Steuergerät ausgewertet werden. Zusätzlich können diese Funktelegramme auch die Daten enthalten, die dem jeweiligen Auswahlsignal zugrunde liegen, also ob die Funktelegramme von Radmodulen an linksseitig montierten Rädern oder von Radmodulen an rechtsseitig montierten Rädern stammen. Nach zusätzlicher Auswertung der Signalstärke dieser Funktelegramme verfügt das Steuergerät über sämtliche erforderlichen Informationen, um ein eintreffendes Funktelegramm der Radposition des sendenden Radmoduls zuordnen zu können. Eine zusätzliche Verwendung von Radmodul-Identifikationscodes ist nicht länger erforderlich.

Andererseits schließt die vorliegende Erfindung die Verwendung solcher Radmodul-Identifkationscodes nicht aus. Enthalten die von den selektierten Radmodulen stammenden Funktelegramme zusätzlich solche Identifikationscodes, so muss die Signalstärkenauswertung nicht für jedes eintreffende Funktelegramm durchgeführt werden, sondern es ist ausreichend, wenn diese Signalstärkenauswertung nur in größeren zeitlichen Abständen durchgeführt wird. Die innerhalb eines solchen Intervalls eintreffenden Funktelegramme können dann anhand ihres Identifikationscodes zugeordnet werden.

Nachstehend werden verschiedene Einzelheiten der vorliegenden Erfindung mehr im Einzelnen erläutert.

Die hier angesprochenen Radmodule sind in vielfältiger Form im Stand der Technik beschrieben, beispielsweise auch in den eingangs referierten Dokumenten.

Je ein in solchen Radmodulen verwendbarer Drucksensor, Beschleunigungssensor, sowie Datenspeichereinrichtungen wie etwa RAM oder EEPROM sind beispielsweise in dem Dokument DE 43 03 583 A1 beschrieben, dessen relevante Offenbarung insoweit ausdrücklich auch zum Bestandteil der vorliegenden Unterlagen gemacht wird.

Das Radmodul ist innerhalb des von Luftreifen und Felge begrenzten Raums in eindeutiger bestimmter Weise angeordnet, beispielsweise am Ventilkopf befestigt oder mit Hilfe eines die Felge umschlingenden Bandes oder Drahtes an der Felge befestigt. Innerhalb des Radmoduls ist der Beschleunigungssensor so angeordnet, dass er die Radumdrehungsrichtung erfassen kann. Damit haben zumindest sämtliche Laufräder eines Fahrzeugs einen identischen Aufbau. In einer gemeinsamen Achsposition, beispielsweise der Vorderachsposition sind zwei identische Laufräder spiegelbildlich zueinander angeordnet. Damit rotiert bei Vorwärtsfahrt des Fahrzeugs das eine Rad in einer Rad-Vorwärtsumdrehungsrichtung und gleichzeitig das andere Rad in einer Rad-Ruckwärtsumdrehungsrichtung. Diese Radumdrehungsrichtungen korrespondieren mit dem jeweiligen Vorzeichen der vom Beschleunigungssensor erzeugten Spannung. Damit kann anhand des vom Beschleunigungssensor erzeugten Signals erkannt und ausgewertet werden, ob ein bestimmtes Rad an der linken Fahrzeugseite oder an der rechten Fahrzeugseite montiert ist. Diese Erkenntnis und Auswertung liegt auch den Vorschlagen in den eingangs referierten Dokumenten EP 0 760 299 B1 und EP 1 003 647 B1 zugrunde.

Drucksensor und Beschleunigungssensor können in einem einzigen Chip integriert sein. Gut geeignet ist hier beispielsweise ein im Fachhandel erhältlicher "Tire Pressure Monitor SIP with motion sensor" (SIP steht für System in a package), der ausgerüstet ist mit einem Drucksensor auf der Basis einer piezo-resistiven Wheatstone-Brückenschaltung, einem Beschleunigungssensor auf der Basis einer weiteren piezo-resistiven Wheatstone-Brückenschaltung und einem Mikrocontroller, dem ein Low-power-Sensor-Interface zugeordnet ist. An dieses Interface können verschiedene Datenspeichereinrichtungen, wie etwa RAM, EEPROM oder ROM angeschlossen werden. Dieser Sensorchip wird vorzugsweise in den erfindungsgemäßen Radmodulen verwendet.

Der vorstehend erläuterte Beschleunigungssensor liefert ein Analogsignal. Vorzugsweise ist vorgesehen, dieses Analogsignal einem A/D-Wandler zuzuführen und in ein 4-Bit-Wort umzuwandeln. Dieses 4-Bit-Wort kann dann in der Datenspeichereinrichtung am Radmodul abgelegt, dort gespeichert und für die Korrelation mit einem Aufforderungssignal des Steuergeräts bereitgehalten werden. Es ist möglich, nach jedem Fahrzeugstart dieses 4-Bit-Wort neu zu bilden und damit den gespeicherten Wert zu überschreiben. Andererseits ist es vorteilhaft, auch während eines Fahrzeugstillstands den Speicherinhalt für wenigstens eine bestimmte gegebene Zeitspanne zu erhalten, damit nicht bei jedem kurzzeitigen Fahrzeugstillstand dieser Speicherinhalt neu gebildet werden muss.

Die HF-Sende/Empfangseinrichtung am Radmodul ist typischerweise ein Transceiver, der für die bidirektionale Signaldatenkommunikation mit dem Steuergerät bei den dafür behördlich zugelassenen Frequenzen von etwa 433, 868 oder 915 MHz ausgelegt ist. Die Übermittlung von Funktelegrammen und der Empfang von Signalen des Steuergerätes erfolgt bei der gleichen Frequenz, so dass innerhalb einer gegebenen Zeitperiode entweder eine Sendephase oder eine Empfangsphase stattfinden kann. Sowohl in der Sendephase wie in der Empfangsphase tritt ein merklicher Stromverbrauch auf, beispielsweise bis zu etwa 10 mA, so dass die Dauer dieser Phase möglichst kurz gehalten werden muss, um mit der begrenzten Leistung der Batterie am Radmodul eine möglichst lange Lebensdauer und Leistungsbereitschaft zu gewährleisten. Typischerweise soll die Dauer zum Aussenden eines Funktelegramms oder zum Empfang eines Aufforderungssignals nur einige Millisekunden betragen. Hierzu ist eine Synchronisation des wechselseitigen Signalaustauschs zwischen Steuergerät und Radmodulen erforderlich. Außerhalb der Sende- oder Empfangsphasen ist der Transceiver und die weitere Mess- und Auswerteelektronik am Radmodul in einen energiesparenden Bereitschaftszustand ("sleep mode") versetzt.

Ein Ereignis, beispielsweise Radumdrehung, oder Überschreiten einer vorgegebenen Radumdrehungsgeschwindigkeit, oder eine Änderung der Radumdrehungsgeschwindigkeit aktiviert den Transceiver am Radmodul. Es wird ein Anmeldungs-Funktelegramm ausgesendet, mit dem sich jedes empfangsbereite Radmodul am Steuergerät anmeldet. Das Steuergerät übermittelt daraufhin ein Anmeldungsbestätigungssignal mit Betriebsmodus, d. h. welche Messungen durchzuführen sind, etwa Beschleunigung, Druck und Temperatur, und in welchen Zeitabständen diese Messungen durchzuführen und deren Ergebnisse per Funktelegramm zu übermitteln sind. Für diese Übermittlung von Funktelegrammen wird ein Zeitraster mit bestimmten Zeitschlitzen zugeteilt. Im Zeitraum zwischen diesen Zeitschlitzen gehen die Radmodule in den Bereitschaftszustand ("sleep mode"), messen anschließend und senden das Funktelegramm innerhalb der vorgegebenen Zeitschlitze. Nach dem Aussenden einer vorgegebenen Anzahl von Funktelegrammen geht das Radmodul wieder in den Empfangsmodus, um ein neues Betriebsmodussignal zu erhalten.

Im Rahmen der vorliegenden Erfindung wird ein selektierendes Betriebsmodussignal erzeugt, das die Radmodule veranlasst, den Beschleunigungssensor zu aktivieren und in Abhängigkeit vom Vorzeichen der gebildeten Spannung die Funktelegramme nach einem ersten Zeitraster oder nach einem zweiten Zeitraster zu übermitteln. Beispielsweise können die selektierten, linksseitig montierten Radmodule ihre Funktelegramme während eines ersten Zeitrasters aussenden, und die nicht-selektierten bzw. rechtsseitig montierten Radmodule werden ihre Funktelegramme während eines damit nicht überlappenden zweiten Zeitrasters aussenden.

Die Korrelation mit dem Aufforderungssignal des Steuergeräts kann darin bestehen, dass dieses Aufforderungssignal ein Datenpaket enthält, welches gezielt die Radmodule auf der linken Fahrzeugseite oder auf der rechten Fahrzeugseite anspricht; beispielsweise kann das jeweilige Aufforderungssignal das gleiche 4-Bit-Wort sein, das in der Datenspeichereinrichtung am Radmodul gespeichert ist. Nach Empfang, Ablage und Auswertung dieses Aufforderungssignals und Feststellung einer Übereinstimmung zwischen gespeicherter Adresse (4-Bit-Wort aus dem Beschleunigungssensor) und anfragender Adresse wird das Radmodul ein, Druckdaten enthaltendes Funktelegramm aussenden, das zusätzlich das Fahrzeugseitensignal enthält, also das hier angesprochene 4-Bit-Wort. Am Steuergerät wird die Signalstärke dieses Funktelegramms ausgewertet und beispielsweise anhand hoher Feldstärke der Vorderachsposition bzw. anhand niedriger Feldstärke der Hinterachsposition zugeordnet. Damit verfügt das Steuergerät über sämtliche erforderlichen Radpositionsinformationen, um das Funktelegramm einer bestimmten Radposition zuzuordnen, in der sich das sendende Radmodul- befindet.

Die HF-Sende/Empfangseinrichtung am Steuergerät ist typischerweise ein Transceiver, dem eine Antenne zugeordnet ist, welche sowohl für Sendezwecke wie für Empfangszwecke dient. Gut geeignet ist hier eine A/4-Monopol-Antenne, die bei einer typischen Frequenz von 869 MHz eine Länge von 8,2 cm hat und leicht am Steuergerät untergebracht werden kann. Alternativ können auch Helixantennen oder Loopantennen eingesetzt werden. Das Steuergerät wird typischerweise etwa mittig über einer Achse, beispielsweise über der Vorderachse angeordnet. In diesem Falle bestehen je die im wesentlichen gleichen, nahen Abstände zu den beiden Rädern in der Vorderachsposition, sowie je die im wesentlichen gleichen, weiten Abstände zu den beiden Rädern in der Hinterachsposition. Die unterschiedliche Länge der Signalübertragungswege führt zu deutlichen und auswertbaren Unterschieden in der jeweiligen Signalstärke. Beispielsweise wurden bei einer solchen Anordnung für Funktelegramme aus der Vorderachsposition eine Signalstärke von etwa -80 dBm gemessen, während die entsprechenden Funktelegramme aus der Hinterachsposition eine Signalstärke von etwa -60 dBm bis -65 dBm aufwiesen. Anhand einer Schwellenwertauswertung oder dergleichen kann auf diesem Wege eindeutig zwischen einerseits den Signalen aus der Vorderachsposition und andererseits den Signalen aus der Hinterachsposition unterschieden werden. Weil mit einer solchen Anordnung innerhalb eines gegebenen Zeitfensters an einem einzigen Empfangsort nur zwischen Signalen aus zwei verschiedenen Signalquellen unterschieden werden muss, kann diese Unterscheidung schnell, sicher und zuverlässig durchgeführt werden.

Die Ermittlung des Signalstärkenunterschiedes kann mit Hilfe üblicher Feldstärkesensoren erfolgen. Vorzugsweise ist hier vorgesehen, dass der Transceiver am Steuergerät mit einer internen RSSI-Schaltung ausgerüstet ist. Entsprechende Transceiver stehen handelsüblich zur Verfügung. Gut geeignet ist hier beispielsweise ein im Fachhandel erhältlicher "Single Chip very low power RF-Transceiver" in 0,35 µm CMOS-Technology, der im Rahmen der vorliegenden Erfindung vorzugsweise eingesetzt wird. Bei einer Signalfrequenz von 868 MHz liefert diese RSSI-Schaltung für Feldstärken zwischen etwa -100 dBm und -50 dBm eine Spannung zwischen 1,2 und 0,1 Volt, wobei die Spannung umgekehrt proportional zur Feldstärke des Eingangssignals ist. Mit Hilfe einer solchen RSSI-Schaltung können die hier auftretenden Feldstärkeunterschiede sicher erfasst, ausgewertet und den jeweiligen Radpositionen zugeordnet werden.

Nachstehend wird das Verfahren zur Durchführung der erfindungsgemäßen Reifenluftdruckkontrolle erläutert.

Auf ein Ereignis hin, beispielsweise nach jedem Fahrzeugstart und/oder Erreichen einer ausreichenden Fahrzeuggeschwindigkeit wird regelmäßig und völlig autonom eine Aktivierung des in jedem Radmodul vorhandenen Beschleunigungssensors stattfinden. Die Bereitschaft zur Aktivierung der als Festkörper-Wandlerstruktur ausgebildeten Beschleunigungssensoren ist praktisch unbegrenzt gegeben. Die so aktivierten Beschleunigungssensoren werden das für ihre anteilige Radposition maßgebliche Auswahlsignal bilden und in der je am Radmodul vorgesehenen Datenspeichereinrichtung ablegen, damit dieses Auswahlsignal dort gespeichert und für die Korrelation mit einem selektierenden Aufforderungssignal des Steuergeräts bereitgehalten wird. Hierzu kann beispielsweise in den linksseitig angeordneten Radmodulen direkt dieses erste Auswahlsignal (also beispielsweise linksseitige Radmodule) abgespeichert werden, und in den rechtsseitigen Radmodulen kann das dazu komplementäre Auswahlsignal abgespeichert werden, also rechtsseitige Radmodule oder nichtlinksseitige Radmodule (zweites Auswahlsignal).

Nach einem vorgegebenen Regime wird das Steuergerät die Radmodule auffordern, in regelmäßigen Abständen Funktelegramme mit den Drucksignalen entsprechenden Modulierungen auszusenden. Innerhalb dieses Regimes wird das Steuergerät auch ein selektierendes, das Vorliegen oder Nicht-Vorliegen des Auswahlsignals abfragendes Aufforderungssignal aussenden, das nur diejenigen Radmodule auffordert, innerhalb eines vorgegebenen Zeitfensters oder Zeitrasters ein Funktelegramm zu übermitteln, die über das gespeicherte Auswahlsignal verfügen oder nicht verfügen. Beispielsweise kann das selektierende Aufforderungssignal das erste Auswahlsignal enthalten, und mit diesem Aufforderungssignal werden die beiden, auf der linken Fahrzeugseite befindlichen Radmodule aufgefordert, je ein Funktelegramm zu übermitteln.

Daraufhin werden nur die selektierten Radmodule, also im gegebenen Beispiel das in der linken Vorderachsposition befindliche und das in der linken Hinterachsposition befindliche Radmodul innerhalb eines gegebenen Zeitfensters oder Zeitrasters ein Funktelegramm aussenden. Dieses Funktelegramm kann die anteilige Radinformation enthalten. Alternativ kann das Steuergerät das freigeschaltete Zeitfenster nur für Funktelegramme aus diesen anteiligen Radpositionen vorsehen. In jedem Falle enthält das Steuergerät eine Information, dass diese Funktelegramme von linksseitigen Radmodulen stammen.

Diese beiden Radmodule haben einen unterschiedlichen Abstand zur Empfangsantenne am Steuergerät, so dass die Funktelegramme mit unterschiedlicher Signalstärke am Steuergerät eintreffen werden, und dort anhand ihres Signalstärkenunterschiedes dem einen Radmodul oder dem anderen Radmodul zugeordnet werden. Beispielsweise wird das Funktelegramm mit hoher Feldstärke der Vorderachsposition, und das Funktelegramm mit niedriger Feldstärke der Hinterachsposition zugeordnet. Auf diese Weise kann das Steuergerät jedes empfangene Funktelegramm eindeutig einer bestimmten Radposition zuordnen. In dieser Verfahrensvariante muss an jedem empfangenen Funktelegramm die Signalstärkenauswertung vorgenommen werden.

Mit Hilfe eines selektierenden Aufforderungssignals, das ein solches Radmodul auffordert, ein Funktelegramm auszusenden, das weder über das erste Auswahlsignal noch über das zweite Auswahlsignal verfügt, kann auch ein Reserverad am Fahrzeug erfasst und dessen Reifenluftdruck ausgewertet werden.

Nach einer alternativen Verfahrensvariante kann vorgesehen werden, dass die hinsichtlich ihrer Radposition ausgewerteten Funktelegramme zusätzlich auch ein, für das jeweilige Radmodul charakteristisches Identifikationssignal enthalten. Nachdem die Herkunft eines bestimmten Funktelegramms aus einer bestimmten Radposition mit Hilfe der vorstehend angegebenen Maßnahmen ermittelt worden ist, kann daraufhin das Identifikationssignal dieses Funktelegramms dieser bestimmten Radposition zugeordnet werden.

Es ist ausreichend, wenn diese Zuordnung von Funktelegramm und Identifikationssignal zu einer bestimmten Radposition nur in größeren Intervallen durchgeführt wird, beispielsweise nach Empfang einer vorgegebenen Anzahl von Funktelegrammen und/oder nach jedem Anlassen des Fahrzeugmotors und/oder Ablauf einer vorgegebenen Anzahl von Fahrzeugstarts und dergleichen. Auch in diesem kann die Zuordnung von Radposition und Radmodul-Identifikationscode völlig autonom ablaufen.

Innerhalb dieser Grenzen können je ein Identifikationssignal enthaltende Funktelegramme empfangen und ausgewertet werden. Diese Funktelegramme werden in herkömmlicher Weise anhand der am Steuergerät vorliegenden Korrelation von Identifikationssignal und Radposition der bestimmten Radposition zugeordnet, in der sich das, mit diesem Identifikationssignal identifizierte Radmodul befindet, von dem dieses Funktelegramm stammt.

Diese Arbeitsweise kann zweckmäßig sein, wenn das Radmodul zusätzlich nach einem eigenen Regime - ohne Aufforderung durch das Steuergerät - Funktelegramme aussendet, beispielsweise wenn an einem betroffenen Luftreifen plötzlich ein hoher Druckabfall auftritt, der eine sofortige Warnung erfordert.

## Patentansprüche

1. Reifenluftdruck-Kontrolleinrichtung für ein Fahrzeug mit mehreren Rädern, die je mit einem Luftreifen ausgerüstet sind, umfassend:
wenigstens ein Radmodul für jeden überwachten Luftreifen, wobei das Radmodul aufweist:
- einen Drucksensor, um ein mit dem Luftreifen-Luftdruck korrespondierendes elektrisches Drucksignal zu erzeugen;
- einen Beschleunigungssensor, um am fahrenden Fahrzeug die Umdrehungsrichtung eines rotierenden Rades zu erfassen und daraus ein mit der jeweiligen Fahrzeugseite korrespondierendes Auswahlsignal zu bilden;
- eine Signaldatenverarbeitungseinrichtung mit einer Datenspeichereinrichtung, wobei die Signaldatenverarbeitungseinrichtung im Radmodul angefallene Signale, einschließlich des Drucksignals, verarbeitet und ein Funktelegramm erzeugt, das den im Radmodul angefallenen Signalen entsprechende Modulierungen aufweist; und
- eine mit der Signaldatenverarbeitungseinrichtung gekoppelte HF-Sende/Empfangseinrichtung für eine telemetrische Signaldatenkommunikation mit einem Steuergerät am Fahrzeug; und
das stationär am Fahrzeug angebrachte Steuergerät, das mit je einer Mikroprozessor gestützten Datensignalerzeugungseinrichtung und Datensignalverarbeitungseinrichtung sowie mit einer HF-Sende/Empfangseinrichtung mit wenigstens einer zugeordneten Antenne ausgerüstet ist, um einerseits Aufforderungssignale zu erzeugen und telemetrisch an die Radmodule zu übermitteln, und um andererseits die von den Radmodulen erzeugten Funktelegramme zu empfangen und auszuwerten,
**dadurch gekennzeichnet, dass**
- das von den Beschleunigungssensoren an den betroffenen Radmodulen erzeugte Auswahlsignal je direkt oder in Form eines davon abgeleiteten Signals in deren Datenspeichereinrichtung gespeichert und für eine Korrelation mit einem Aufforderungssignal des Steuergeräts bereitgehalten wird;
- das Steuergerät ein selektierendes das Vorliegen oder Nicht-Vorliegen des Auswahlsignals abfragendes Aufforderungssignal aussendet, das nur diejenigen Radmodule auffordert, innerhalb eines gegebenen Zeitfensters oder Zeitrasters ein Funktelegramm zu übermitteln, die über das gespeicherte Auswahlsignal verfügen oder nicht verfügen; und
- daraufhin, innerhalb des gegebenen Zeitfensters oder Zeitrasters, nur die von dem selektierten Radmodul oder von den selektierten Radmodulen stammenden Funktelegramme ausgesendet werden.

2. Reifenluftdruck-Kontrolleinrichtung nach Anspruch 1,
umfassend wenigstens vier Radmodule für ein Fahrzeug mit wenigstens vier Laufrädern, wobei - je in Fahrtrichtung des Fahrzeugs - wenigstens zwei Laufräder auf der linken Fahrzeugseite montiert sind und die anderen Laufräder auf der rechten Fahrzeugseite montiert sind, und der Beschleunigungssensor ein erstes Auswahlsignal bildet, das mit der Umdrehungsrichtung der linksseitig montierten Laufräder korrespondiert bzw. ein zweites Auswahlsignal bildet, das mit der Umdrehungsrichtung der rechtsseitig montierten Laufräder korrespondiert; und bei welcher:
- das von diesen Beschleunigungssensoren an je zwei Radmodulen erzeugte erste Auswahlsignal je direkt oder in Form eines davon abgeleiteten Signals in deren Datenspeichereinrichtung gespeichert wird (erste Radmodule); und
- das in den beiden anderen Radmodulen erzeugte zweite Auswahlsignal je direkt oder in Form eines davon abgeleiteten Signals in deren Datenspeichereinrichtung gespeichert wird (zweite Radmodule);
- das Steuergerät ein selektierendes Aufforderungssignal aussendet, das entweder die ersten Radmodule oder die zweiten Radmodule auffordert, innerhalb eines gegebenen Zeitfensters oder Zeitrasters ein Funktelegramm auszusenden; und
- daraufhin, innerhalb des gegebenen Zeitfensters oder Zeitrasters nur die von den beiden selektierten Radmodulen stammenden Funktelegramme ausgesendet werden.

3. Reifenluftdruck-Kontrolleinrichtung nach einem der Ansprüche 1 bis 2, bei welcher zwei von den beiden selektierten Radmodulen stammende Funktelegramme mit unterschiedlicher Signalstärke an der mit dem Steuergerät gekoppelten Antenne eintreffen; und anhand ihres Signalstärkenunterschiedes dem einen selektierten Radmodul oder dem anderen selektierten Radmodul zugeordnet werden.

4. Reifenluftdruck-Kontrolleinrichtung nach einem der Ansprüche 1 bis 3, bei welcher das Steuergerät und/oder dessen Antenne(n) im Bereich der Fahrzeug-Längsmittelebene und benachbart zu einer Fahrzeugachse sowie entfernt zur anderen Fahrzeugachse angeordnet ist.

5. Reifenluftdruck-Kontrolleinrichtung nach einem der Ansprüche 1 bis 4, bei welcher die HF-Sende/Empfangseinrichtung am Steuergerät ein Transceiver ist, der mit einer internen RSSI-Schaltung versehen ist.

6. Reifenluftdruck-Kontrolleinrichtung nach einem der Ansprüche 1 bis 5, bei welcher die nach Empfang des selektierenden Aufforderungssignals von den selektierten Radmodulen gesendeten Funktelegramme auch eine dem jeweiligen Auswahlsignal entsprechende Modulierung aufweisen.

7. Reifenluftdruck-Kontrolleinrichtung nach einem der Ansprüche 1 bis 6, bei welcher der Drucksensor eine Mess- und Auswerteelektronik aufweist.

8. Reifenluftdruck-Kontrolleinrichtung nach einem der Ansprüche 1 bis 7, bei welcher der Beschleunigungssensor eine angepasste Auswerteelektronik aufweist.

## Claims

1. A tire air pressure monitoring device for a vehicle with several wheels, each of which is equipped with pneumatic tires, comprising:
at least one wheel module for each monitored pneumatic tire, in which the wheel module compromises:
- a pressure sensor, in order to generate an electric pressure signal corresponding to the pneumatic tire air pressure;
- an acceleration sensor, in order to record the direction of rotation of a rotating wheel on the moving vehicle and to form from it a selection signal corresponding to the vehicle side;
- a signal data processing device with a data storage device, in which the signal data processing device processes signals formed in the wheel module, including the pressure signal, and generates a radio telegram having modulations corresponding to the signals occurring in the wheel module; and
- an HF transmitting/receiving device coupled to the signal data processing device for telemetric signal data communication with a control device on the vehicle; and a control device mounted stationary on the vehicle, which is equipped with a data signal generation device and a data signal processing device, each supported with a microprocessor, as well as with an HF transmitting/receiving device with at least one assigned antenna, in order to generate demand signals, and send them telemetrically to the wheel modules, and to receive and evaluate the radio telegrams generated by the wheel modules;
**characterized in that:**
- the selection signal generated by these acceleration signals on the corresponding wheel modules is entered and stored, directly or in the form of a signal derived from it, in its data storage device and kept ready for correlation with a demand signal of the control device;
- the control device sends a selecting demand signal that queries the presence or absence of the selection signal, which requires only the wheel modules that have or do not have the stored selection signal to send a radio telegram within a stipulated time window or time frame; and
- thereupon, within the stipulated time window or time frame, only the radio telegrams originating from the selected wheel module or the selected wheel modules are sent.

2. The tire air pressure monitoring device according to claim 1,
comprising at least four wheel modules for a vehicle with at least four wheels,
in which, depending on the direction of travel of the vehicle, at least two wheels are mounted on the left side of the vehicle and the two other wheels are mounted on the right side of the vehicle, and the acceleration sensor forms a first selection signal, which corresponds to the direction of rotation of the wheels mounted on the left side and forms a second selection signal, which corresponds to the direction of rotation of the wheels mounted on the right side; and in which:
- the first selection signal generated by these acceleration sensors on two wheel modules is stored, directly or in the form of a signal derived from it, in its data storage memory device (first wheel module); and
- the second selection signal generated in the two other wheel modules is stored, directly or in the form of a signal derived from it, in its data memory device (second wheel module);
- the control device sends a selecting demand signal, which requires either the first wheel module or the second wheel module to send a radio telegram within a stipulated time window or time frame; and
- thereupon, within the stipulated time window or time frame, only the radio telegrams originating from the two selected wheel modules are sent.

3. The tire air pressure monitoring device according to any one of claims 1 to 2, in which two of the radio telegrams originating from the two selected wheel modules arrive at the antenna coupled to the control device with different signal intensities; and by means of their signal intensity difference, they are assigned to one selected wheel module or the other selected wheel module.

4. The tire air pressure monitoring device according to any one of claims 1 to 3, in which the control device and/or its antenna(s) is arranged in the region of the vehicle longitudinal center plane and adjacent to a vehicle axle, as well as distant from the other vehicle axle.

5. Tire air pressure monitoring device according to any one of claims 1 to 4, in which the HF transmitting/receiving device on the control device is a transceiver; this receiver is provided with an internal RSSI circuit.

6. The tire air pressure monitoring device according to any one of claims 1 to 5, in which the radio telegrams sent by the selected wheel modules, after receipt of the selecting demand signal, also have modulation corresponding to the corresponding selection signal.

7. The tire air pressure monitoring device according to any one of claims 1 to 6, in which the pressure sensor has measurement and evaluation electronics.

8. The tire air pressure monitoring device according to any one of claims 1 to 7, in which the acceleration sensor has adjusted evaluation electronics.

## Revendications

1. Dispositif de commande de la pression de pneumatiques pour un véhicule avec plusieurs roues qui sont équipées chacune d'un pneumatique, comportant :
■ au moins un module de roue pour chaque pneumatique surveillé, le module de roue présentant :
■ un capteur de pression afin de générer un signal de pression électrique correspondant à la pression de pneumatique ;
■ un capteur d'accélération afin de détecter sur le véhicule roulant le sens de rotation d'une roue qui tourne et de former à partir de là un signal de sélection correspondant au côté du véhicule respectif ;
■ un dispositif de traitement des données des signaux avec un dispositif de mémorisation des données, le dispositif de traitement des données des signaux traitant des signaux produits dans le module de roue, y compris le signal de pression, et générant un radiotélégramme qui présente des modulations correspondant aux signaux produits dans le module de roue ; et
■ un dispositif d'émission/réception HF couplé au dispositif de traitement des données de signaux pour une communication des données de signaux télémétrique avec un appareil de commande sur le véhicule ; et
■ l'appareil de commande monté de manière stationnaire sur le véhicule qui est équipé d'un dispositif de génération de signaux de données et d'un dispositif de traitement de signaux de données assistés par un microprocesseur ainsi que d'un dispositif d'émission/réception HF avec au moins une antenne associée afin de générer d'une part des signaux d'invitation et de les transmettre de manière télémétrique aux modules de roue et de recevoir et d'évaluer d'autre part les radiotélégrammes générés par les modules de roue,
**caractérisé en ce que**
■ le signal de sélection généré par les capteurs d'accélération sur les modules de roue concernés est enregistré directement ou sous la forme d'un signal dérivé dans son dispositif de mémorisation de données et est tenu prêt pour une corrélation avec un signal d'invitation de l'appareil de commande ;
■ l'appareil de commande émet un signal d'invitation sélectif, demandant la présence ou la non présence du signal de sélection, qui invite seulement les modules de roue à transmettre dans une fenêtre de temps ou créneau horaire donné un radiotélégramme, lesquels disposent ou ne disposent pas du signal de sélection enregistré ; et
■ à la suite de quoi, dans la fenêtre de temps ou le créneau horaire donné, seuls les radiotélégrammes provenant du module de roue sélectionné ou des modules de roue sélectionnés sont émis.

2. Dispositif de commande de la pression de pneumatiques selon la revendication 1,
comportant au moins quatre modules de roue pour un véhicule avec au moins quatre roues de roulement, dans le sens de la marche du véhicule, au moins deux roues de roulement étant montées sur le côté gauche du véhicule et les autres roues de roulement étant montées sur le côté droit du véhicule, et le capteur d'accélération formant un premier signal de sélection qui correspond au sens de rotation des roues de roulement montées côté gauche ou formant un second signal de sélection qui correspond au sens de rotation des roues de roulement montées côté droit ; et pour lequel :
■ le premier signal de sélection généré par ces capteurs d'accélération sur chacun des deux modules de roue est enregistré directement ou sous la forme d'un signal dérivé dans son dispositif de mémorisation de données (premiers modules de roue) ; et
■ le second signal de sélection généré dans les deux autres modules de roue est enregistré directement ou sous la forme d'un signal dérivé dans son dispositif de mémorisation de données (seconds modules de roue) ;
l'appareil de commande émet un signal d'invitation sélectif qui invite les premiers modules de roue ou les seconds modules de roue à émettre dans une fenêtre de temps ou un créneau horaire donné un radiotélégramme ; et
à la suite de quoi, dans la fenêtre de temps ou le créneau horaire donné, seuls les radiotélégrammes provenant des deux modules de roue sélectionnés sont émis.

3. Dispositif de commande de la pression de pneumatiques selon l'une quelconque des revendications 1 à 2, pour lequel deux radiotélégrammes provenant des deux modules de roue sélectionnés arrivent avec une intensité de signal différente sur l'antenne couplée à l'appareil de commande ; et sont associés au moyen de leur différence d'intensité de signal à un module de roue sélectionné ou à l'autre module de roue sélectionné.

4. Dispositif de commande de la pression de pneumatiques selon l'une quelconque des revendications 1 à 3, pour lequel l'appareil de commande et/ou son antenne/ses antennes sont disposées dans la zone du plan médian longitudinal du véhicule et de manière contiguë à un axe de véhicule ainsi qu'éloignée de l'autre axe de véhicule.

5. Dispositif de commande de la pression de pneumatiques selon l'une quelconque des revendications 1 à 4, pour lequel le dispositif d'émission/réception HF sur l'appareil de commande est un émetteur-récepteur qui est pourvu d'un circuit interne RSSI.

6. Dispositif de commande de la pression de pneumatiques selon l'une quelconque des revendications 1 à 5, pour lequel les radiotélégrammes émis après la réception du signal d'invitation sélectif par les modules de roue sélectionnés présentent également une modulation correspondant au signal de sélection respectif.

7. Dispositif de commande de la pression de pneumatiques selon l'une quelconque des revendications 1 à 6, pour lequel le capteur de pression présente un dispositif électronique de mesure et d'évaluation.

8. Dispositif de commande de la pression de pneumatiques selon l'une quelconque des revendications 1 à 7, pour lequel le capteur d'accélération présente un dispositif électronique d'évaluation adapté.
